# EUROPÄISCHE PATENTSCHRIFT

(11) **EP 0 823 687 B1**
(45) Veröffentlichungstag und Bekanntmachung des Hinweises auf die Patenterteilung: **31.01.2001**
(21) Anmeldenummer: 96112894.9
(22) Anmeldetag: 09.08.1996
(51) Int. Cl.: G06F 17/60, G06F 17/50

(54) **Computernetzwerk und Verfahren zur Freigabe von Bau- und Konstruktionsplänen**
Computer network and method for the approval of building and construction plans
Réseau d'ordinateurs et procédé d'approbation des plans de construction

(43) Veröffentlichungstag der Anmeldung: 11.02.1998
(73) Patentinhaber: Seib, Hans, Dipl.-Ing., 97332 Volkach (DE); Fersch, Andreas Dipl.-Ing., 97259 Greussenheim (DE)
(72) Erfinder: Seib, Hans, Dipl.-Ing., 97332 Volkach (DE); Fersch, Andreas Dipl.-Ing., 97259 Greussenheim (DE)
(74) Vertreter: Zangs, Rainer E., Dipl.-Ing.

(56) Entgegenhaltungen:
- EP-A- 0 269 875
- EP-A- 0 387 462
- US-A- 5 040 142
- US-A- 5 239 466

## Beschreibung

Die Erfindung betrifft ein Computernetzwerk und ein Verfahren zur Freigabe von Bau und Konstruktionsplänen auf elektronischem Weg.

US-A-5 239 466 betrifft ein Verfahren zum Austausch vorgespeicherten Daten, die durch das Netz gesendet werden und nach Aufforderung zur Änderung oder Handhabung wieder gespeichert werden können.

Bau- und Konstruktionspläne müssen nach ihrer Fertigstellung durch den Konstrukteur oder Planer von anderen Personen geprüft werden. Ergibt die Prüfung, daß der Plan frei von Fehlern ist und daß er die gestellten Anforderungen erfüllt, gibt die prüfende Person den Plan frei. Andernfalls verweigert die prüfende Person die Freigabe des Plans und gibt den Plan an den Konstrukteur oder Planer mit einer Aufforderung zur Fehlerkorrektur oder Änderung zurück. Nachdem der Konstrukteur oder Planer die Änderungen durchgeführt hat, wird der Plan erneut der prüfenden Person vorgelegt, die dann nach erneuter Prüfung den Plan in der Regel freigibt. Die Freigabe des Plans wird dokumentiert, indem die prüfende Person den Plan unter Angabe des Datums der Prüfung handschriftlich an einer dafür vorgesehenen Stelle im Schriftfeld des Plans abzeichnet. Die dabei verwendeten Schriftfelder haben einen genormten Aufbau (beispielsweise nach DIN 6771), so daß die Unterschrift der prüfenden Person immer an derselben Stelle des Bau- oder Konstruktionsplans zu finden ist.

Sind mehrere prüfende Personen mit der Prüfung eines Planes beauftragt, wird eine Reihenfolge festgelegt, in der die Prüfung erfolgt. Es entsteht eine Prüfhierarchie, die aus mehreren Prüfinstanzen besteht, denen nacheinander der jeweils von der vorhergehenden Prüfinstanz freigegebene Plan vorgelegt wird. Vom Konstrukteur oder Planer gelangt der Plan zunächst zur Prüfinstanz der untersten Hierarchieebene, die ihre Prüfung durchführt und dann den Plan nach dessen Freigabe, die durch die Unterschrift der Prüfinstanz an vorgegebener Stelle auf dem Plan dokumentiert wird, an die in der Hierarchie nächste höhere Instanz weitergibt. Von dieser Prüfinstanz wird nach durchgeführter Prüfung und Freigabe der Plan erneut weitergegeben und gelangt auf diesem Weg schließlich zur Prüfinstanz der höchsten Hierarchieebene, nach deren Prüfung und Freigabe der Plan zur Ausführung zur Verfügung steht. Erst dann kann der Plan auf der Baustelle verwendet und das geplante Bauwerk ausgeführt werden. Wenn eine der Prüfinstanzen Fehler feststellt oder Änderungen für erforderlich hält, wird der Plan von dieser Prüfinstanz nicht freigegeben, sondern an den Konstrukteur oder Planer zurückgeschickt, der einen korrigierten oder geänderten Plan erstellt und erneut der Prüfinstanz der untersten Hierarchieebene zur Prüfung vorlegt. Der Plan durchläuft erneut die Prüfung in sämtlichen Prüfinstanzen bis zur abschließenden Freigabe durch die Prüfinstanz der obersten Hierarchieebene.

Die Laufzeit eines Planes durch die Prüfhierarchie ist erheblich, insbesondere in solchen Fällen, in denen die Prüfinstanzen räumlich sehr weit voneinander entfernt liegen. Da der Plan handschriftlich unterzeichnet werden muß, um freigegeben zu werden, muß der Plan körperlich von einer Prüfinstanz zur anderen verbracht werden, was regelmäßig auf dem Postweg geschieht. Da alle Prüfinstanzen in der vorgegebenen Reihenfolge den Plan prüfen müssen und alle Prüfinstanzen auf ein und demselben Plan die Freigabe durch ihre Unterschrift dokumentieren müssen, kann der Plan von den Prüfinstanzen nicht parallel bearbeitet werden.

Erschwerend kommt hinzu, daß insbesondere bei Großbauprojekten oft eine sehr große Anzahl von Plänen geprüft und freigegeben werden muß. Die Prüfinstanzen stehen dabei vor der Aufgabe, sehr viele Pläne durchsehen und an die nächste Prüfinstanz weiterleiten zu müssen.

Obwohl Pläne heutzutage mit elektronischen Hilfsmitteln erstellt werden, beispielsweise mit CAD-Systemen, und obwohl die Möglichkeit besteht, die in Dateiform gespeicherten Pläne mit Hilfe von geeigneten Kommunikationsgeräten schnell über große Distanzen hinweg zu übertragen, konnten diese Möglichkeiten bislang nicht genutzt werden, da für die Freigabe eines Plans stets die eigenhändige Unterschrift der Prüfinstanz auf dem Plan erforderlich war. Diese Anforderung gilt um so mehr in Fällen, in denen eine oder mehrere der Prüfinstanzen hoheitliche Aufgaben wahrnehmen, d.h. die mit der Freigabe verbundene Aussage hoheitlichen Charakter trägt.

Vor diesem Hintergrund besteht die Aufgabe der Erfindung darin, ein Computernetzwerk und ein Verfahren zur elektronischen Freigabe von Bau- und Konstruktionsplänen anzugeben, durch die die Freigabe von Plänen schneller als bisher durchgeführt werden kann, ohne daß die Pläne in körperlicher Form transportiert werden müssen.

Dabei ist die Erfindung darauf ausgerichtet, die Lösung kostengünstig zu gestalten, die modernen Möglichkeiten, insbesondere die modernen Kommunikationsmittel, auszunutzen, und den Hard- und Software-Aufwand bei allen Beteiligten so gering wie möglich zu halten. Gleichzeitig soll jedermann an dem Verfahren bzw. dem Computernetzwerk teilnehmen können.

Die Aufgabe wird gelöst durch ein Computernetzwerk gemäß Patentanspruch 1 und ein Verfahren gemäß Patentanspruch 9 oder 14. Zweckmäßige Ausgestaltungen ergeben sich jeweils aus den Unteransprüchen.

Bei den erfindungsgemäßen Grafikdaten handelt es sich um eine Darstellung des Planes in einem standardisierten und plattformübergreifenden Format(beispielsweise HP-GL® oder HP-GL/2®), das weitgehend unabhängig ist von dem Programm, mit dessen Hilfe der Plan erstellt wurde. Die Grafikdaten sind primär dazu bestimmt, einen Ausdruck des Planes auf einen Drucker/Plotter zu erstellen. Die Grafikdaten eignen sich regelmäßig nicht dazu, den Plan zu bearbeiten, da die Programme für die Erstellung und Bearbeitung derartiger Pläne andere Datenformate verwenden.

Erfindungsgemäß bilden die Daten des Planes (Grafikdaten) und die Freigabedaten eine eine Einheit, die aufgrund der zentralen Verwaltung unauflösbar ist. Da die Grafikdaten in einem plattformübergreifenden Standardformat vorliegen (beispielsweise HP-GL® oder HP-GL/2®), kann allen Prüfinstanzen auf vergleichsweise einfache Weise das Bild des Planes zugänglich gemacht werden, da die Grafikdaten ohne großen programmtechnischen Aufwand, auf einem Drucker ausgedruckt oder auf einem Bildschirm angezeigt werden können. Es ist nicht erforderlich, daß die Prüfinstanzen über die Programme verfügen, die zum Erstellen oder Bearbeiten der Grafikdaten erforderlich sind, welche Programme grundsätzlich auch eine Möglichkeit zum Ausdrucken bzw. Anzeigen der Pläne enthalten. Da die Prüfinstanzen die Pläne nicht ändern, sondern nur prüfen und freigeben, ist es ausreichend, ihnen eine Möglichkeit zum Drucken bzw. Betrachten der Pläne zu geben. Dieser Umstand steigert einerseits die Wirtschaftlichkeit, da der programmtechnische Aufwand bei den Prüfinstanzen auf ein Minimum reduziert wird, und andererseits die Manipulationssicherheit, da neben den erfindungsgemäß Absicherungen eine Manipulation schon dadurch erschwert wird, daß die dafür erforderlichen Programme grundsätzlich nicht zur Verfügung stehen.

Manipulationen werden erfindungsgemäß dadurch sicher verhindert, daß die Grafikdaten und die Freigabedaten als Einheit von der zentralen Datenstation verwaltet werden und so eine Manipulation in jedem Fall festgestellt werden kann.

Die Einheit aus Grafikdaten und Freigabedaten kann beispielsweise dadurch hergestellt werden, daß aus den Grafikdaten mit Hilfe eines Verschlüsselungsalgorithmus in der Datenzentrale oder bereits beim Planer ein Schlüssel erzeugt wird, der in den Freigabedaten abgespeichert wird. Dadurch werden die Freigabedaten mit den Grafikdaten verknüpft und jede Änderung der Grafikdaten kann festgestellt werden, wenn der Schlüssel aus den Grafikdaten zur Überprüfung erneut erstellt und mit dem anfänglich erstellten Schlüssel verglichen wird. Da nur die Datenzentrale den Schlüssel erstellen und in die Freigabedaten einfügen kann und da nur der Datenzentrale der Verschlüsselungsalgorithmus bekannt ist, kann keiner der Teilnehmer die Einheit aus Grafikdaten und Freigabedaten aufheben und die Grafikdaten verändern.

Daneben bestehen unterschiedliche andere Möglichkeiten, die erfindungsgemäße Einheit aus Grafikdaten und Freigabedaten herzustellen, beispielsweise unter Nutzung moderner Datenbanksysteme, die selbst über geeignete Sicherungssysteme verfügen und sich für die Gestaltung einer entsprechend abgesicherten Datenbank anbieten, so daß die erfindungsgemäße Einheit aus Grafikdaten und Freigabedaten erzeugt wird. So könnte bei jeder Station eine replizierte Kopie der zugriffskontrollierten Datenbank der Datenzentrale vorgesehen werden, in der ganz oder teilweise die gleichen Daten, d.h. die gleichen Einheiten aus Grafikdaten und Freigabedaten gespeichert sind und der Prüfinstanz zur Verfügung stehen.

Die Prüfinstanzen haben nur die Möglichkeit, auf die Einheit aus Grafikdaten und Freigabedaten zuzugreifen oder bei der Datenzentrale abzurufen, den Plan auf einem Bildschirm anzuzeigen und auszudrucken und die Freigabe oder Nicht-Freigabe in Form einer eineindeutigen elektronischen Signatur zu dokumentieren, die von der Datenzentrale zusammen mit dem Datum in die Freigabedaten eingefügt wird. Dieser Vorgang kann nur einmal durchgeführt werden und bewirkt eine Sperrung der Freigabedaten für die Prüfinstanz, die bereits durch Signatur die Freigabe bzw. Ablehnung des Planes dokumentiert hat.

Das Computernetzwerk gemäß der Erfindung besteht aus mehreren Stationen und einer Datenzentrale, zu der die Stationen über elektronische Kommunikationsverbindungen eine Verbindung herstellen können, um die Einheit aus Grafikdaten und Freigabedaten von der Datenzentrale abzurufen bzw. Daten zur Datenzentrale zu übertragen. Im Hinblick auf die Einheit aus Grafikdaten und Freigabedaten steht den Prüfinstanzen dabei nur die Möglichkeit zur Verfügung, geänderte Freigabedaten an die Datenzentrale zu übertragen, und zwar entweder allein oder zusammen mit den Grafikdaten, wobei die Änderung in den Freigabedaten nur aus dem Ergebnis der Prüfung, d.h. Freigabe oder Ablehnung und der elektronischen Signatur der Prüfinstanz besteht. Die Datenzentrale überprüft die Änderungen in den Freigabedaten und stellt nach erfolgter Freigabe die Einheit aus Grafikdaten und Freigabedaten der nächst höheren Prüfinstanz zur Verfügung. Dies kann dadurch erfolgen, daß die Datenzentrale die Einheit aus Grafikdaten und Freigabedaten vollautomatisch an die Station der nächsthöheren Prüfinstanz überträgt oder der nächsthöheren Prüfinstanz die Nachricht übermittelt, daß die Einheit aus Grafikdaten und Freigabedaten auf Abruf zur Verfügung steht.

Nur die Station des Konstrukteurs oder Planers kann Grafikdaten erstellen, diese Grafikdaten zusammen mit einer elektronischen Signatur an die Datenzentrale übertragen, die daraus die Einheit aus Grafikdaten und Freigabedaten erstellt. Dies kann in der Form geschehen, daß die Datenzentrale aus den Grafikdaten mit Hilfe eines geheimgehaltenen Verschlüsselungsalgorithmus einen die Grafikdaten eineindeutig kennzeichnenden Schlüssel erzeugt und in den Freigabedaten speichert und damit eine fälschungssichere Kopplung zwischen dem Datensatz der Freigabedaten und den Grafikdaten herstellt, die für keine Stationen des Systems auflösbar ist. Die Datenzentrale speichert vorzugsweise neben dem die Grafikdaten kennzeichnenden Schlüssel auch die elektronische Signatur des Konstrukteurs oder Planers und das Datum der Übertragung in dem Freigabesatz ab. Danach sind die Grafikdaten auch für den Konstrukteur oder Planer dem freien Zugriff entzogen, so daß er diese Daten nicht verändern oder durch andere Daten ersetzen kann. Um eine Änderung vorzunehmen, ist es für den Konstrukteur oder Planer erforderlich, neue Grafikdaten zu erstellen und diese zusammen mit seiner elektronischen Signatur erneut an die Datenzentrale zu übertragen. Die Datenzentrale erstellt daraufhin eine neue Einheit aus Grafikdaten und Freigabedaten, wie zuvor beschrieben. Der Konstrukteur oder Planer kann dabei angeben, daß die zuvor gespeicherte Einheit aus Grafikdaten und Freigabedaten gelöscht wird. Die Löschung kann jedoch davon abhängig gemacht werden, ob eine der Prüfinstanzen bereits durch elektronische Signatur die Freigabe bzw. die Ablehnung dokumentiert hat.

Die Stationen des erfindungsgemäßen Computernetzwerkes bieten neben der Möglichkeit des Anzeigens und des Ausdruckens der Grafikdaten die Möglichkeit, den Inhalt der Freigabedaten zumindest insoweit zu untersuchen, daß der Stand der Freigabe innerhalb der Prüfhierarchie festgestellt werden kann. Das bedeutet, daß festgestellt werden kann, ob und welche Prüfinstanz bereits die Prüfung des Plans anhand der Grafikdaten durchgeführt hat. Insbesondere beim Drucken, aber auch bei der Anzeige ist es möglich, den Inhalt des Freigabedatensatzes, der den Signaturen der Prüfinstanzen entspricht, in lesbarer Form auf dem ausgedruckten oder angezeigten Plan darzustellen, als wäre dies ein Teil der Grafikdaten des Plans. In einem dafür freigehaltenen Bereich des Plans werden diese Angaben eingefügt, indem beispielsweise aus dem Freigabedatensatz Freigabegrafikdaten erzeugt werden, die in die Grafikdaten des Plans an der entsprechenden Stelle eingefügt werden. Auf diesem Weg besteht die Möglichkeit, einen vollständigen Plan mit Hilfe der Grafikdaten und der Freigabegrafikdaten anzuzeigen und auszudrucken, aus dem der Stand der Freigabe in der Prüfhierarchie, ohne daß die Grafikdaten des Planes geändert werden müssen, entnehmbar ist. Insbesondere nach Abschluß der Prüfung kann auf diese Weise ein Plan ausgedruckt werden, der für den Einsatz auf der Baustelle zur Verfügung steht.

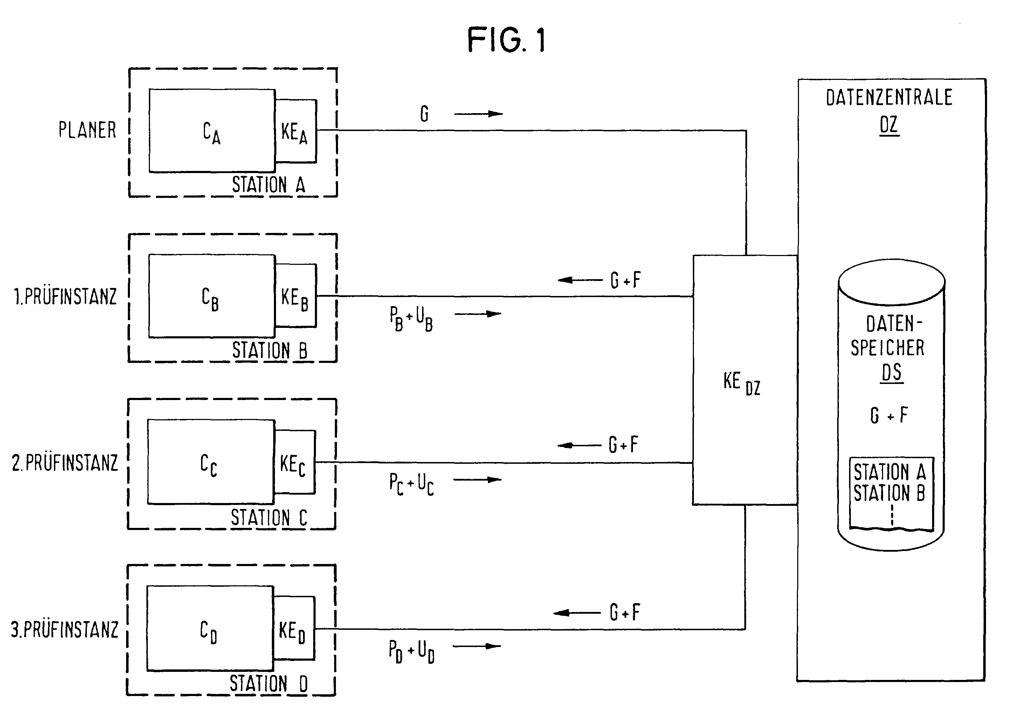

Im folgenden wird die Erfindung anhand eines Ausführungsbeispiels genauer beschrieben und dabei Bezug genommen auf die
- Fig. 1: die eine schematische Darstellung des Computernetzes gemäß der Erfindung zeigt.

Anhand von Fig. 1 wird ein Ausführungsbeispiel der Erfindung genauer beschrieben, bei dem die Prüfhierarchie aus drei Prüfinstanzen besteht. Aus diesem Grund besteht das erfindungsgemäße Computernetzwerk aus einer Datenzentrale und vier Stationen, nämlich der Station A für den Planer, der Station B für die erste Prüfinstanz, der Station C für die zweite Prüfinstanz und der Station D für die dritte Prüfinstanz. Die Stationen A bis D sind mit der Datenzentrale DZ verbunden, so daß zwischen der Datenzentrale und den einzelnen Stationen Daten übertragen werden können. Die Stationen A bis D und die Datenzentrale besitzen Kommunikationseinrichtungen KE_{A}, KE_{B}, KE_{C}, KE_{D} und KE_{DZ}, die an ein Telefon- oder Datennetz angeschlossen sind, über das permanent oder von Fall zu Fall Verbindungen aufgebaut werden können. Als Kommunikationseinrichtungen KE kommt beispielsweise eine Netzwerkanbindung an ein LAN oder ein Modem oder ISDN-Adapter in Frage; als Verbindungsnetz dient dann das LAN bzw. das Telefon- oder ISDN-Netz.

Bei den Stationen A bis D sind die Kommunikationseinrichtungen KE mit einem Computer (C_{A}, C_{B}, C_{C} und C_{D}) verbunden, der die Teilnehmer in die Lage versetzt, die Graphikdaten eines Planes auf einem Bildschirm anzuzeigen oder auf einem Drucker bzw. Plotter auszugeben.

Die Datenzentrale verfügt über einen Datenspeicher (DS), in dem Graphikdaten und Freigabedaten sowie Teilnehmerdaten abgespeichert sind. Bei den zuvor beschriebenen Beispiel eines erfindungsgemäßen Computernetzwerk ergibt sich folgender Ablauf bei der Freigabe eines Bau- oder Konstruktionsplanes.

Der Planer stellt eine Verbindung zwischen der Station A und der Datenzentrale DZ her. Dabei wird die Identität des Planers bzw. der Station A überprüft und die Zugangsberechtigung verifiziert. Danach überträgt der Planer von der Station A aus die Graphikdaten G an die Datenzentrale DZ. Da der Datenzentrale die Herkunft der Grafikdaten G bekannt ist, erstellt sie, ohne daß weitere Eingaben des Planers oder der Station A erforderlich wären, die Einheit G+F aus Grafikdaten G und Freigabedaten F und vermerkt in den Freigabedaten F den Planer als Quelle der Grafikdaten G sowie das Datum der Übertragung der Grafikdaten. Die Datenzentrale DZ speichert die Einheit aus Grafikdaten G und Freigabedaten F im Datenspeicher DS ab.

Die Datenzentrale erzeugt dabei aus den ihr übermittelten Grafikdaten G die Einheit G + F aus Grafikdaten G und Freigabedaten F derart, daß die Einheit G + F für alle Teilnehmer unauflöslich ist und daß die Grafikdaten des Plans von keinem Teilnehmer mehr geändert werden können. Die Einheit G + F kann beispielsweise dadurch erzeugt werden, daß die Datenzentrale DZ aus den Grafikdaten G mit Hilfe eines Verschlüsselungsalgorithmus einen Schlüssel S errechnet und in den Freigabedaten F abspeichert. Dadurch werden die Freigabedaten F an die Grafikdaten G gekoppelt und die gewünschte Einheit G + F erzeugt. Ändert ein Teilnehmer die Grafikdaten G, wird diese Änderung festgestellt, wenn die Datenzentrale DZ erneut aus den Grafikdaten G mit Hilfe des Verschlüsselungsalgorithmus den Schlüssel S errechnet. Kein Teilnehmer kann den in den Freigabedaten F abgespeicherten Schlüssel S an geänderte Grafikdaten G anpassen, da der Verschlüsselungsalgorithmus nur der Datenzentrale DZ bekannt ist. Bei dieser ist sichergestellt, daß die bei den Teilnehmern in den Stationen A bis D abgespeicherten Einheiten G + F aus Grafikdaten G und Freigabedaten F nicht manipuliert werden können.

Die Einheit G + F aus Grafikdaten G und Freigabedaten F kann aber auch dadurch hergestellt werden, daß bis auf den Planer an der Station A kein weiterer Teilnehmer berechtigt ist, Grafikdaten an die Grafikzentrale zu übertragen. Von den Prüfinstanzen an den Stationen B bis D erwartet die Datenzentrale lediglich das Ergebnis der Prüfung, also Freigabe oder Ablehnung, und die elektronische Unterschrift mit der das übermittelte Ergebnis der Prüfung autorisiert wird. Auch für den Planer an der Station A besteht keine Möglichkeit zur Änderung der Grafikdaten G, da bei erneuter Übertragung von Grafikdaten G' eine neue Einheit aus Grafikdaten G' und Freigabedaten F' erzeugt wird.

Nach Erhalt der Grafikdaten G und der Station A des Planers und nach Bildung der Einheit G + F leitet die Datenzentrale DZ die Einheit aus Grafikdaten G und Freigabedaten F an die Station B der ersten Prüfinstanz weiter. Dazu stellt sie zunächst eine Verbindung mit der Station B her und identifiziert sich als Datenzentrale DZ. Die Weiterleitung der Einheit aus Grafikdaten G und Freigabedaten F erfolgt, entweder indem die Einheit G + F sofort an die Station B übertragen wird oder indem eine Meldung an die Station B übertragen wird, daß die Einheit G + F im Datenspeicher der Datenzentrale zum Abruf bereit steht.

Für den Fall, daß die Datenzentrale die Einheit G + F sofort an die Station B der ersten Prüfinstanz weitergeleitet hat, kann die erste Prüfinstanz unmittelbar mit der Prüfung des Planes beginnen, den sie sich mit Hilfe der Grafikdaten G und eines entsprechenden Programms ausdruckt oder auf einem Bildschirm anzeigt. Für den Fall, daß die Datenzentrale DZ nur eine Meldung an die Station B der ersten Prüfinstanz übertragen hatte, stellt die erste Prüfinstanz zunächst eine Verbindung zwischen der Station B und der Datenzentrale DZ her, die nach Überprüfung der Identität der ersten Prüfinstanz die Einheit aus Grafikdaten G und Freigabedaten F an die Station B überträgt. Nach der Überprüfung des Planes stellt die erste Prüfinstanz von der Station B aus erneut eine Verbindung zur Datenzentrale DZ her. Dabei wird erneut die Identität der ersten Prüfinstanz an der Station B verifiziert. Die erste Prüfinstanz überträgt dann an die Datenzentrale das Ergebnis P_{B} der Prüfung, nämlich Freigabe oder Ablehnung, und autorisiert diese Übertragung durch eine elektronische Unterschrift U_{B}, die ebenfalls an die Datenzentrale übertragen wird.

Die Datenzentrale vermerkt die Freigabe oder Ablehnung durch die erste Prüfungsinstanz in den Freigabedaten F der Einheit G + F aus Grafikdaten G und Freigabedaten F. Für den Fall, daß die erste Prüfinstanz den Plan nicht freigegeben hat, benachrichtigt die Datenzentrale den Planer an der Station A entweder durch eine Meldung oder die sofortige Übertragung der Einheit aus Grafikdaten G und Freigabedaten F. Für den Fall, daß die erste Prüfinstanz an der Station B den Plan freigegeben hat, leitet die Datenzentrale die Einheit aus Grafikdaten G und Freigabedaten F an die zweite Prüfinstanz an der Station C weiter. Dies erfolgt wiederum in Form der sofortigen Übertragung der Einheit G + F oder in Form einer Meldung, die zum Abrufen der gespeicherten Einheit G + F auffordert.

Analog zur ersten Prüfinstanz erfolgt die Prüfung des Plans durch die zweite Prüfinstanz an der Station C. Auch die zweite Prüfinstanz überträgt das Ergebnis P_{C} der Prüfung an die Datenzentrale und autorisiert sich, durch die elektronische Unterschrift U_{C}, woraufhin die Datenzentrale das Ergebnis der Prüfung durch die zweite Prüfinstanz in den Freigabedaten F der Einheit aus Grafikdaten G und Freigabedaten F vermerkt. Nach Freigabe des Planes durch die zweite Prüfinstanz von der Station C aus, leitet sich die Datenzentrale die Einheit aus Grafikdaten G und Freigabedaten F an die nächste Prüfinstanz weiter.

Auch die dritte Prüfinstanz an der Station D überprüft den Plan anhand eines Ausdrucks oder einer Anzeige der Grafikdaten G und autorisiert das Ergebnis P_{D} der Prüfung, das an die Datenzentrale übertragen wird, mit Hilfe einer elektronischen Unterschrift U_{D}. Die Datenzentrale speichert die elektronischen Unterschriften der Prüfinstanzen in den Freigabedaten ebenso wie das Datum, an dem die Freigabe durch die jeweilige Prüfinstanz erfolgt ist.

Bei der im Ausführungsbeispiel gewählten dreistufigen Hierarchie liegt nach der Prüfung des Planes durch die dritte Prüfinstanz der Plan in einer vollständig freigegebenen Fassung vor. In der Datenzentrale DZ ist dies in den Freigabedaten F vermerkt. Darin sind die elektronischen Unterschriften der Prüfinstanzen sowie das Datum, an dem die Freigabe erfolgte, abgespeichert.

## Patentansprüche

1. Computernetzwerk für die Freigabe von Bau- und Konstruktionsplänen mit
- einer Datenzentrale (DZ), die eine Kommunikationseinrichtung (KE_{DZ}) aufweist und die vorbereitet ist, über eine mittels der Kommunikationseinrichtung hergestellte Verbindung eine Einheit (G+F) aus Grafikdaten (G) eines Bau- oder Konstruktionsplanes und Freigabedaten (F) des Bau-oder Konstruktionsplanes zu übertragen und Änderungen der Freigabedaten (F) zu empfangen, und
- mehreren Stationen (A, B, C, D), die jeweils eine Kommunikationseinrichtung (KE_{A}, KE_{B}, KE_{C}, KE_{D}), über die die Stationen jeweils mit der Datenzentrale verbindbar sind, und einen Computer (C_{A}, C_{B}, C_{C},C_{D}) aufweisen, der vorbereitet ist, über eine mittels der Kommunikationseinrichtung hergestellte Verbindung die Einheit (G+F) aus Grafikdaten (G) eines Bau- oder Konstruktionsplanes und Freigabedaten (F) des Bau- oder Konstruktionsplanes von der Datenzentrale zu empfangen und Änderungen der Freigabedaten (F) an die Datenzentrale zu übertragen.

2. Computernetzwerk nach Anspruch 1, dadurch gekennzeichnet, daß die Datenzentrale (DZ) vorbereitet ist, von zumindest einer der Stationen (A) die Grafikdaten (G) eines Bau- oder Konstruktionsplanes zu empfangen und daraus eine Einheit (G+F) aus Grafikdaten (G) und Freigabedaten (F) des Bau- oder Konstruktionsplanes zu erstellen.

3. Computernetzwerk nach Anspruch 2, dadurch gekennzeichnet, daß die Datenzentrale (DZ) die Einheit (G+F) aus Grafikdaten (G) und Freigabedaten (F) des Bau- oder Konstruktionsplanes durch Bestimmung eines Schlüssels (S) aus den Grafikdaten (G) mittels eines Verschlüsselungsalgoritmus und Speicherung des Schlüssels (S) in den Freigabedaten (F) des Bau- oder Konstruktionsplanes erstellt.

4. Computernetzwerk nach einem der Ansprüche 1, 2 oder 3, dadurch gekennzeichnet, daß die Datenzentrale (DZ) vorbereitet ist, die Einheit (G+F) aus Grafikdaten (G) und Freigabedaten (F) des Bau- oder Konstruktionsplanes an eine zweite (C) der mehreren Stationen erst nach dem Empfang einer Änderung der Freigabedaten (F) des Bau- oder Konstruktionsplanes durch eine erste (B) der mehreren Stationen zu übertragen.

5. Computernetzwerk nach einem der Ansprüche 1 bis 4, dadurch gekennzeichnet, daß der Computer (C_{A}, C_{B}, C_{C},C_{D}) jeder der mehreren Stationen (A, B, C, D) vorbereitet ist, die Grafikdaten (G) auf einer Anzeigeeinrichtung anzuzeigen oder auf einer Druckeinrichtung auszudrucken.

6. Computernetzwerk nach einem der Ansprüche 1 bis 5, dadurch gekennzeichnet, daß der Computer (C_{A}, C_{B}, C_{C},C_{D}) jeder der mehreren Stationen (A, B, C, D) vorbereitet ist, die Änderung der Freigabedaten (F) durch einen Benutzer zu gestatten.

7. Computernetzwerk nach Anspruch 6, dadurch gekennzeichnet, daß der Computer (C_{A}, C_{B}, C_{C}, C_{D}) jeder der mehreren Stationen (A, B, C, D) vorbereitet ist, die Änderung der Freigabedaten (F) durch einen Benutzer nur nach Feststellung der Berechtigung des Benutzers zur Änderung der Freigabedaten (F) zu gestatten.

8. Computernetzwerk nach Anspruch 7, dadurch gekennzeichnet, daß der Computer (C_{A}, C_{B}, C_{C},C_{D}) jeder der mehreren Stationen (A, B, C, D) vorbereitet ist, die Feststellung der Berechtigung des Benutzers zur Änderung der Freigabedaten (F) durch Abfrage einer Identifikation und eines Passwortes des Benutzers durchzuführen.

9. Verfahren zur Freigabe von Bau- und Konstruktionsplänen bei dem aus Grafikdaten (G) eines Bau- oder Konstruktionsplanes und aus Freigabedaten (F) des Bau- oder Konstruktionsplanes eine Einheit (F+G) aus den Grafikdaten (G) des Bau- oder Konstruktionsplanes und aus den Freigabedaten (F) des Bau- oder Konstruktionsplanes erstellt wird und die Freigabe des Bau- oder Konstruktionsplanes durch Änderung der Freigabedaten (F) der Einheit (F+G) aus den Grafikdaten (G) des Bau- oder Konstruktionsplanes und den Freigabedaten (F) des Bau- oder Konstruktionsplanes erfolgt.

10. Verfahren nach Anspruch 9, dadurch gekennzeichnet, daß die Einheit (F+G) aus den Grafikdaten (G) des Bau- oder Konstruktionsplanes und den Freigabedaten (F) des Bau- oder Konstruktionsplanes in einer Datenzentrale (DZ) erfolgt.

11. Verfahren nach Anspruch 10, dadurch gekennzeichnet, daß die Freigabe des Bau- oder Konstruktionsplanes im Zusammenwirken der Datenzentrale (DZ) mit mehreren Stationen (A, B, C, D) erfolgt.

12. Verfahren nach Anspruch 11, dadurch gekennzeichnet, daß eine der Stationen (A) die Grafikdaten (G) des Bau- oder Konstruktionsplanes zur Datenzentrale (DZ) überträgt.

13. Verfahren nach einem der Ansprüche 11 oder 12, dadurch gekennzeichnet, daß eine der Stationen (B,C,D) die Einheit (F+G) aus den Grafikdaten (G) des Bau- oder Konstruktionsplanes und den Freigabedaten (F) des Bau- oder Konstruktionsplanes empfängt, die Freigabedaten (F) des Bau- oder Konstruktionsplanes ändert und die geänderten Freigabedaten (F) des Bau- oder Konstruktionsplanes an die Datenzentrale (DZ) überträgt.

14. Verfahren zur Freigabe von Bau- und Konstruktionsplänen mit Hilfe eines Computernetzes aus einer Datenzentrale (DZ), die eine Kommunikationseinrichtung (KE_{DZ}) aufweist, und mehreren Stationen (A, B, C, D), die jeweils eine Kommunikationseinrichtung (KE_{A}, KE_{B}, KE_{C}, KE_{D}), über die die Stationen jeweils mit der Datenzentrale verbindbar sind, und einen Computer (C_{A}, C_{B}, C_{C},C_{D}) aufweisen, mit folgenden Schritten:
a) Erstellen von Grafikdaten (G) eines Bau- oder Konstruktionsplanes in einer (A) der Stationen und Übertragen der Grafikdaten (G) des Bau- oder Konstruktionsplanes an die Datenzentrale (DZ);
b) Erstellen einer Einheit (G+F) aus den Grafikdaten (G) des Bau- oder Konstruktionsplanes und aus Freigabedaten (F) des Bau- oder Konstruktionsplanes;
c) Übertragen der Einheit (G+F) aus den Grafikdaten (G) des Bau- oder Konstruktionsplanes und aus den Freigabedaten (F) des Bau- oder Konstruktionsplanes an eine erste (B) der Stationen;
d) Ändern der Freigabedaten der Einheit (G+F) aus den Grafikdaten (G) des Bau- oder Konstruktionsplanes und aus den Freigabedaten (F) des Bau- oder Konstruktionsplanes in der ersten (B) der Stationen und Übertragen der geänderten Freigabedaten (F) an die Datenzentrale (DZ);
e) Übertragen der Einheit (G+F) aus den Grafikdaten (G) des Bau- oder Konstruktionsplanes und aus den Freigabedaten (F) des Bau- oder Konstruktionsplanes an eine weitere (C) der Stationen; und
f) Wiederholen der Schritte d) und e) bis die Einheit (G+F) aus den Grafikdaten (G) des Bau- oder Konstruktionsplanes und aus den Freigabedaten (F) des Bau- oder Konstruktionsplanes Hand sämtliche der mehreren Stationen (A, B, C, D) übertragen wurde.

## Claims

1. Computer network for enabling construction and design plans with
- a data exchange (DZ), having a communication device (KE_{DZ}) and being prepared to transmit a unit (G+F) consisting of graphic data (G) of a construction or design plan and enabling data (F) of the construction or design plan and to receive modifications to the enabling data (F) via a connection produced by means of the communication device, and
- several stations (A, B, C, D), having in each case a communication device (KE_{A}, KE_{B}, KE_{C}, KE_{D}), via which the stations can be respectively connected to the data exchange, and a computer (C_{A}, C_{B}, C_{C}, C_{D}), which is prepared to receive the unit (G+F) consisting of graphic data (G) of a construction or design plan and enabling data (F) of the construction or design plan from the data exchange and to transmit modifications to the enabling data (F) to the data exchange via a connection produced by means of the communication device.

2. Computer network according to Claim 1, characterised in that the data exchange (DZ) is prepared to receive the graphic data (G) of a construction or design plan from at least one of the stations (A) and to generate therefrom a unit (G+F) consisting of graphic data (G) and enabling data (F) of the construction or design plan.

3. Computer network according to Claim 2, characterised in that the data exchange (DZ) generatess the unit (G+F) consisting of graphic data (G) and enabling data (F) of the construction or design plan by determining a code (S) from the graphic data (G) by means of a coding algorithm and storing the code (S) in the enabling data (F) of the construction or design plan.

4. Computer network according to one of Claims 1, 2 or 3, characterised in that the data exchange (DZ) is prepared to transmit the unit (G+F) consisting of graphic data (G) and enabling data (F) of the construction or design plan to a second (C) of the several stations only after a modification to the enabling data (F) of the construction or design plan has been received by a first (B) of the several stations.

5. Computer network according to one of Claims 1 to 4, characterised in that the computer (C_{A}, C_{B}, C_{C}, C_{D}) of each of the several stations (A, B, C, D) is prepared to display the graphic data (G) on a display device or to print them out on a printing device.

6. Computer network according to one of Claims 1 to 5, characterised in that the computer (C_{A}, C_{B}, C_{C}, C_{D}) of each of the several stations (A, B, C, D) is prepared to allow a modification to the enabling data (F) by a user.

7. Computer network according to Claim 6, characterised in that the computer (C_{A}, C_{B}, C_{C}, C_{D}) of each of the several stations (A, B, C, D) is prepared to allow a modification to the enabling data (F) by a user only after confirming the authority of the user to modify the enabling data (F).

8. Computer network according to Claim 7, characterised in that the computer (C_{A}, C_{B}, C_{C}, C_{D}) of each of the several stations (A, B, C, D) is prepared to carry out confirmation of the authority of the user to modify the enabling data (F) by calling up an identification and a password of the user.

9. Procedure for enabling construction or design plans, in which from graphic data (G) of a construction or design plan and enabling data (F) of the construction or design plan a unit (F+G) is generatedd consisting of the graphic data (G) of the construction or design plan and the enabling data (F) of the construction or design plan and enabling of the construction or design plan takes place by modifying the enabling data (F) of the unit (F+G) consisting of the graphic data (G) of the construction or design plan and the enabling data (F) of the construction or design plan.

10. Procedure according to Claim 9, characterised in that the unit (F+G) consisting of the graphic data (G) of the construction or design plan and the enabling data (F) of the construction or design plan is generatedd in a data exchange (DZ).

11. Procedure according to Claim 10, characterised in that enabling of the construction or design plan takes place in a combined action of the data exchange (DZ) with several stations (A, B, C, D).

12. Procedure according to Claim 11, characterised in that one of the stations (A) transmits the graphic data (G) of the construction or design plan to the data exchange (DZ).

13. Procedure according to one of Claims 11 or 12, characterised in that one of the stations (B, C, D) receives the unit (F+G) consisting of the graphic data (G) of the construction or design plan and the enabling data (F) of the construction or design plan, modifies the enabling data (F) of the construction or design plan and transmits the modified enabling data (F) of the construction or design plan to the data exchange DZ).

14. Procedure for enabling construction and design plans with the aid of a computer network from a data exchange (DZ), having a communication device (KE_{DZ}), and several stations (A, B, C, D), each of which has a communication device (KE_{A}, KE_{B}, KE_{C}, KE_{D}), via which the stations can be respectively connected to the data exchange, and a computer (C_{A}, C_{B}, C_{C}, C_{D}), with the following steps:
a) generating graphic data (G) of a construction or design plan in one (A) of the stations and transmitting the graphic data (G) of the construction or design plan to the data exchange (DZ);
b) generating a unit (G+F) consisting of the graphic data (G) of the construction or design plan and enabling data (F) of the construction or design plan;
c) transmitting the unit (G+F) consisting of the graphic data (G) of the construction or design plan and the enabling data (F) of the construction or design plan to a first (B) of the stations;
d) modifying the enabling data of the unit (G+F) consisting of the graphic data (G) of the construction or design plan and the enabling data (F) of the construction or design plan in the first (B) of the stations and transmitting the modified enabling data (F) to the data exchange (DZ);
e) transmitting the unit (G+F) consisting of the graphic data (G) of the construction or design plan and the enabling data (F) of the construction or design plan to a further (C) of the stations; and
f) repeating steps d) and e) until the unit (G+F) consisting of the graphic data (G) of the construction or design plan and of the enabling data (F) of the construction or design plan has been transmitted to all the several stations (A, B, C, D).

## Revendications

1. Réseau d'ordinateurs pour l'approbation de plans de construction, comportant :
- une centrale de données (DZ) présentant un dispositif de communication (KE_{DZ}) et préparée à transmettre, au moyen d'une liaison établie à l'aide du dispositif de communication, un ensemble (G+F) constitué de données graphiques (G) d'un plan de construction et de données d'approbation (F) du plan de construction, et à recevoir des modifications des données d'approbation (F), et
- plusieurs postes (A, B, C, D) présentant chacun un dispositif de communication (KE_{A}, KE_{B}, KE_{C}, KE_{D}), par l'intermédiaire duquel les postes sont chacun susceptibles d'être reliés à la centrale de données, et présentant un ordinateur (C_{A}, C_{B}, C_{C}, C_{D}) préparé à recevoir de la centrale de données, par l'intermédiaire d'une liaison établie à l'aide du dispositif de communication, l'ensemble (G+F) constitué de données graphiques (G) d'un plan de construction et de données d'approbation (F) du plan de construction, et à transmettre à la centrale de données des modifications de données d'approbation (F).

2. Réseau d'ordinateurs selon la revendication 1, caractérisé en ce que la centrale de données (DZ) est préparée à recevoir, depuis au moins l'un des postes (A), les données graphiques (G) d'un plan de construction et, à partir de là, à établir un ensemble (G+F) constitué de données graphiques (G) et de données d'approbation (F) du plan de construction.

3. Réseau d'ordinateurs selon la revendication 2, caractérisé en ce que la centrale de données (DZ) établit l'ensemble (G+F) constitué de données graphiques (G) et de données d'approbation (F) du plan de construction, par détermination d'une clé (S) à partir des données graphiques (G), au moyen d'un algorithme de codage, et par stockage de la clé (S) dans les données d'approbation (F) du plan de construction.

4. Réseau d'ordinateurs selon l'une des revendications 1, 2 ou 3, caractérisé en ce que la centrale de données (DZ) est préparée à transmettre l'ensemble (G+F), constitué des données graphiques (G) et des données d'approbation (F) du plan de construction, à un deuxième (C) de la pluralité de postes, ensuite, après réception d'une modification des données d'approbation (F) du plan de construction par un premier (B) de la pluralité de postes.

5. Réseau d'ordinateurs selon l'une des revendications 1 à 4, caractérisé en ce que l'ordinateur (C_{A}, C_{B}, C_{C}, C_{D}) de chacun de la pluralité de postes (A, B, C, D) est préparé à afficher les données graphiques (G) sur un dispositif d'affichage ou bien à les imprimer sur un dispositif d'impression.

6. Réseau d'ordinateurs selon l'une des revendications 1 à 5, caractérisé en ce que l'ordinateur (C_{A}, C_{B}, C_{C}, C_{D}) de chacun de la pluralité de postes (A, B, C, D) est préparé pour permettre la modification des données d'approbation (F) par un utilisateur.

7. Réseau d'ordinateurs selon la revendication 6, caractérisé en ce que l'ordinateur (C_{A}, C_{B}, C_{C}, C_{D}) de chacun de la pluralité de postes (A, B, C, D) est préparé pour permettre la modification des données d'approbation (F) par un utilisateur, uniquement après constatation de l'autorisation pour l'utilisateur à modifier les données d'approbation (F).

8. Réseau d'ordinateurs selon la revendication 7, caractérisé en ce que l'ordinateur (C_{A}, C_{B}, C_{C}, C_{D}) de chacun de la pluralité de postes (A, B, C, D) est préparé à effectuer la constatation de l'autorisation pour l'utilisateur à modifier les données d'approbation (F), par interrogation d'une identification et d'un mot de passe de l'utilisateur.

9. Procédé d'approbation de plans de construction, dans lequel, à partir de données graphiques (G) d'un plan de construction, et à partir de données d'approbation (F) du plan de construction, est établi un ensemble (F+G) constitué des données graphiques (G) du plan de construction et des données d'approbation (F) du plan de construction, et l'approbation du plan de construction s'effectuant par modification des données d'approbation (F) de l'ensemble (F+G), constitué à partir des données graphiques (G) du plan de construction et des données d'approbation (F) du plan de construction.

10. Procédé selon la revendication 9, caractérisé en ce que l'ensemble (F+G) constitué des données graphiques (G) du plan de construction et des données d'approbation (F) du plan de construction est constitué dans une centrale de données (DZ).

11. Procédé selon la revendication 10, caractérisé en ce que l'approbation du plan de construction s'effectue en coopération de la centrale de données (DZ) avec plusieurs postes (A, B, C, D).

12. Procédé selon la revendication 11, caractérisé en ce que l'un des postes (A) transmet les données graphiques (G) du plan de construction à la centrale de données (DZ).

13. Procédé selon l'une des revendications 11 ou 12, caractérisé en ce que l'un des postes (B, C, D) reçoit l'ensemble (F+G) constitué des données graphiques (G) du plan de construction et des données d'approbation (F) du plan de construction, modifie les données d'approbation (F) du plan de construction et transmet les données d'approbation (F) modifiées du plan de construction, à la centrale de données (DZ).

14. Procédé d'approbation de plans de construction à l'aide d'un réseau d'ordinateurs, à partir d'une centrale de données (DZ), présentant un dispositif de communication (KE_{DZ}) et une pluralité de postes (A, B, C, D) présentant chacun un dispositif de communication (KE_{A}, KE_{B}, KE_{C}, KE_{D}), par l'intermédiaire duquel les postes peuvent chacun être reliés à la centrale de données, et un ordinateur (C_{A}, C_{B}, C_{C}, C_{D}) présentant les étapes suivantes :
a) établissement de données graphiques (G) d'un plan de construction dans l'un (A) des postes et transmission des données graphiques (G) du plan de construction à la centrale de données (DZ) ;
b) établissement d'un ensemble (G+H) à partir des données graphiques (G) du plan de construction et à partir des données d'approbation (F) du plan de construction ;
c) transmission de l'ensemble (G+F) à partir des données graphiques (G) du plan de construction et à partir des données d'approbation (F) du plan de construction à un premier (B) des postes ;
d) modification des données d'approbation de l'ensemble (G+F) constitué des données graphiques (G) du plan de construction et des données d'approbation (F) du plan de construction dans le premier (B) des postes, et transmission des données d'approbation (F) modifiées à la centrale de données (DZ) ;
e) transmission de l'ensemble (G+F) constitué des données graphiques (G) du plan de construction et des données d'approbation (F) du plan de construction à un autre (C) des postes ; et
f) répétition des étapes d) et e), jusqu'à ce que l'ensemble (G+F), constitué des données graphiques (G) du plan de construction et des données d'approbation (F) du plan de construction ait été transmis, à chacun de la pluralité de postes (A, B, C, D).
